# EUROPEAN PATENT SPECIFICATION

(11) **EP 2 568 532 B1**
(45) Date of publication and mention of the grant of the patent: **30.04.2014**
(21) Application number: 12180966.9
(22) Date of filing: 20.08.2012
(51) Int. Cl.: H01Q 1/24, H01Q 7/00, H01Q 1/22

(54) **MOBILE TERMINAL AND METHOD FOR MANUFACTURING THE SAME**
Mobiles Endgerät und Verfahren zur Herstellung davon
Terminal mobile et son procédé de fabrication

(30) Priority: 09.09.2011 KR 20110092212
(43) Date of publication of application: 13.03.2013
(73) Proprietor: LG ELECTRONICS INC., Yeongdeungpo-gu Seoul 150-721 (KR)
(72) Inventor: Shin, Donghan, Busan (KR); Joo, Wonseok, Seoul (KR)
(74) Representative: Cabinet Plasseraud

(56) References cited:
- WO-A2-2006/087662
- JP-A- 2006 191 194
- US-A1- 2009 197 654

## Description

### BACKGROUND OF THE INVENTION

### 1. Field of the Invention

The present invention relates to a mobile terminal, and more particularly, to a mobile terminal capable of performing near field communication, and a method for manufacturing the same.

### 2. Background of the Invention

A mobile terminal indicates a portable electronic device having at least one of a voice/video call function, an information input/output function, a data storage function, etc.

As functions of the terminal become more diversified, the terminal can support more complicated functions such as capturing images or video, reproducing music or video files, playing games, receiving broadcast signals, and the like. By comprehensively and collectively implementing such functions, the mobile terminal may be embodied in the form of a multimedia player or a device.

Various attempts have been made to implement complicated functions in such a multimedia device by means of hardware or software. For instance, a User Interface (UI) environment is provided in a mobile terminal to enable a user to easily and conveniently search for or select a desired function.

Besides the above attempts, may be considered a method for enhancing a hardware function, etc. This method may include a structural change and improvement for allowing a user to use a mobile terminal in a more convenient manner. As the structural change and improvement, may be considered a near field communication (NFC) antenna for implementing near field wireless communication of a mobile terminal.

### SUMMARY OF THE INVENTION

Therefore, an aspect of the detailed description is to provide a near field communication (NFC) antenna capable of having a new structure on near field communication, and capable of implementing a slim design of a mobile terminal, and a mobile terminal having the same.

Another aspect of the detailed description is to provide a method for manufacturing a mobile terminal capable of easily installing an NFC antenna to a mobile terminal.

To achieve these and other advantages and in accordance with the purpose of this specification, as embodied and broadly described herein, there is provided a mobile terminal according to claim 1.

The antenna coil may include a starting point fixed to one protrusion of the protrusions by being wound several times; and an ending point which forms a loop by extending from the starting point, and fixed to another protrusion adjacent to the one protrusion by being wound several times.

A recess concaved along a shaft direction such that the antenna coil passes therethrough may be formed at each of the one protrusion and the another protrusion. And, the antenna coil may be inserted into the recess, and then may be wound on an outer circumferential surface of the protrusion.

The mobile terminal may further comprise a printed circuit board (PCB) spaced from the base at a preset interval therebetween, and forming space where electronic devices are mounted; and a plurality of connection terminals disposed to be adjacent to the one protrusion and the another protrusion, respectively, and configured to electrically connect the starting point and the ending point to the PCB, respectively.

The plurality of connection terminals may be disposed on a bottom surface of the base, and may be formed to encompass the one protrusion and the another protrusion, respectively. Alternatively, the plurality of connection terminals may be formed to encompass outer circumferential surfaces of the one protrusion and the another protrusion, respectively.

According to another embodiment, the base may include a battery accommodation portion having one surface recessed so as to mount a battery therein, and the battery accommodation portion which defines the one region. And, the antenna coil may be formed to encompass the battery accommodation portion.

The mobile terminal may further comprise a wall disposed between the battery and the antenna coil, and protruding to encompass the battery accommodation portion. And, the antenna coil may be mounted to space between the plurality of protrusions and the wall.

The mobile terminal may further comprise a separation prevention portion disposed to cover the space so as to prevent separation of the antenna coil from the space. The separation prevention portion may be formed such that the space may be covered as ends of the plurality of protrusions are melted.

The mobile terminal may further comprise a main antenna disposed to be adjacent to the battery accommodation portion, and configured to transmit or receive a radio signal associated with far field communication; and a shielding wall protruding between the antenna coil and the main antenna, and configured to prevent interference therebetween.

A ferrite sheet may be attached to one or more surfaces of the shielding wall, and may be configured to remove noise of a radio signal and to restrict a magnetic flux change occurring by a conductor. And, the shielding wall may extend in a width direction of the terminal body.

According to another embodiment, each type of electronic devices may be disposed at the base, and the antenna coil may be formed to encompass the electronic devices.

According to another embodiment, the base may be provided with a bezel portion having a display for outputting visual information. And, the antenna coil may be formed to be wound on a side surface of the bezel portion.

The mobile terminal may further comprise a supporting unit coupled to the bezel portion, and disposed along a side surface of the bezel portion so as to support the antenna coil. The supporting unit may be configured to cover the antenna coil, and may prevent separation of the antenna coil. And, a ferrite sheet may be attached to the supporting unit, and may be configured to remove noise of a radio signal and to restrict a magnetic flux change occurring by a conductor.

To achieve these and other advantages and in accordance with the purpose of this specification, as embodied and broadly described herein, there is also provided a method for manufacturing a mobile terminal, the method comprising: forming a plurality of protrusions protruding from a base mounted to a terminal body, and spaced from each other along an edge of a region; fixing an antenna coil to one of the protrusions in a winding manner several times; winding the antenna coil such that the antenna coil forms a loop which encompasses the edge by being wound on the protrusions; fixing the antenna coil to another protrusion adjacent to the one protrusion in a winding manner several times; and melting the plurality of protrusions by melting taps in a pressing manner so as to cover the antenna coil.

Further scope of applicability of the present application will become more apparent from the detailed description given hereinafter. However, it should be understood that the detailed description and specific examples, while indicating preferred embodiments of the invention, are given by way of illustration only, since various changes and modifications within the scope of the invention will become apparent to those skilled in the art from the detailed description.

### BRIEF DESCRIPTION OF THE DRAWINGS

The accompanying drawings, which are included to provide a further understanding of the invention and are incorporated in and constitute a part of this specification, illustrate exemplary embodiments and together with the description serve to explain the principles of the invention.

In the drawings:
FIG. 1 is a block diagram of a mobile terminal according to one embodiment of the present disclosure;
FIG. 2A is a front perspective view of a mobile terminal according to one embodiment of the present disclosure;
FIG. 2B is a rear perspective view of the mobile terminal of FIG. 2A;
FIG. 3 is a disassembled perspective view of the mobile terminal of FIG. 2B;
FIG. 4 is a sectional view of part 'A' of FIG. 2B;
FIG. 5 is an enlarged view of part 'B' of FIG. 3;
FIG. 6 is a planar view of a mobile terminal according to another embodiment of the present disclosure;
FIG. 7 is a sectional view taken along line 'C-C' in FIG. 6;
FIGS. 8 and 9 are conceptual views each showing that a plurality of protrusions of FIG. 6 are melted by melting taps in a pressed manner;
FIG. 10 is a perspective view of a shielding wall disposed between a main antenna and an antenna coil of FIG. 6; and
FIGS. 11 and 12 are conceptual views each showing a mobile terminal according to another embodiment of the present disclosure.

### DETAILED DESCRIPTION OF THE INVENTION

Description will now be given in detail of the exemplary embodiments, with reference to the accompanying drawings. For the sake of brief description with reference to the drawings, the same or equivalent components will be provided with the same reference numbers, and description thereof will not be repeated.

Hereinafter, a mobile terminal and a method for manufacturing the same according to the present disclosure will be explained in more detail with reference to the attached drawings The suffixes attached to components of the mobile terminal, such as 'module' and 'unit or portion' were used for facilitation of the detailed description of the present disclosure. Therefore, the suffixes do not have different meanings from each other.

The mobile terminal according to the present disclosure may include a portable phone, a smart phone, a laptop computer, a digital broadcasting terminal, Personal Digital Assistants (PDA), Portable Multimedia Player (PMP), an E-book, a navigation system, etc.

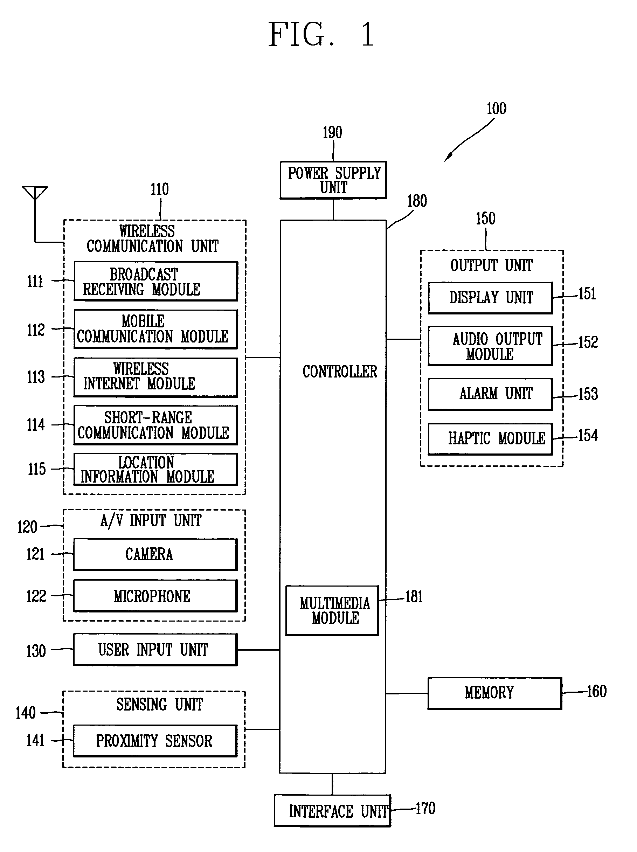

FIG. 1 is a block diagram of a mobile terminal according to one embodiment of the present disclosure.

The mobile terminal 100 may comprise components, such as a wireless communication unit 110, an Audio/Video (A/V) input unit 120, a user input unit 130, a sensing unit 140, an output module 150, a memory 160, an interface unit 170, a controller 180, a power supply unit 190 and the like. FIG. 1 shows the mobile terminal 100 having various components, but it is understood that implementing all of the illustrated components is not a requirement. Greater or fewer components may alternatively be implemented.

Hereinafter, each component is described in sequence.

The wireless communication unit 110 may typically include one or more components which permit wireless communications between the mobile terminal 100 and a wireless communication system or between the mobile terminal 100 and a network within which the mobile terminal 100 is located. For example, the wireless communication unit 110 may include a broadcast receiving module 111, a mobile communication module 112, a wireless internet module 113, a short-range communication module 114, a position information module 115 and the like.

The broadcast receiving module 111 receives a broadcast signal and/or broadcast associated information from an external broadcast managing entity via a broadcast channel.

The broadcast channel may include a satellite channel and/or a terrestrial channel. The broadcast management server may be a server that generates and transmits a broadcast signal and/or broadcast associated information or a server that receives a previously generated broadcast signal and/or broadcast associated information and transmits the same to a terminal. The broadcast associated information may refer to information associated with a broadcast channel, a broadcast program or a broadcast service provider. The broadcast signal may include a TV broadcast signal, a radio broadcast signal, a data broadcast signal, and the like. Also, the broadcast signal may further include a broadcast signal combined with a TV or radio broadcast signal.

The broadcast associated information may also be provided via a mobile communication network and, in this case, the broadcast associated information may be received by the mobile communication module 112.

The broadcast signal may exist in various forms. For example, it may exist in the form of an electronic program guide (EPG) of digital multimedia broadcasting (DMB), electronic service guide (ESG) of digital video broadcast-handheld (DVB-H), and the like.

The broadcast receiving module 111 may be configured to receive signals broadcast by using various types of broadcast systems. In particular, the broadcast receiving module 111 may receive a digital broadcast by using a digital broadcast system such as multimedia broadcasting-terrestrial (DMB-T), digital multimedia broadcasting-satellite (DMB-S), digital video broadcast-handheld (DVB-H), the data broadcasting system known as media forward link only (MediaFLO), integrated services digital broadcast-terrestrial (ISDB-T), etc. The broadcast receiving module 111 may be configured to be suitable for every broadcast system that provides a broadcast signal as well as the above-mentioned digital broadcast systems.

Broadcast signals and/or broadcast-associated information received via the broadcast receiving module 111 may be stored in the memory 160.

The mobile communication module 112 transmits and/or receives radio signals to and/or from at least one of a base station, an external terminal and a server. Such radio signals may include a voice call signal, a video call signal or various types of data according to text and/or multimedia message transmission and/or reception.

The wireless Internet module 113 supports wireless Internet access for the mobile terminal. This module may be internally or externally coupled to the mobile terminal 100. Here, as the wireless Internet technique, a wireless local area network (WLAN), Wi-Fi, wireless broadband (WiBro), world interoperability for microwave access (WiMAX), high speed downlink packet access (HSDPA), and the like, may be used.

The short-range communication module 114 is a module for supporting short range communications. Some examples of short-range communication technology include Bluetooth™, Radio Frequency IDentification (RFID), Infrared Data Association (IrDA), Ultra-WideBand (UWB), ZigBee™, and the like.

The location information module 115 is a module for checking or acquiring a location (or position) of the mobile terminal. For example, the location information module 115 may include a GPS (Global Positioning System) module.

Referring to FIG. 1, the A/V input unit 120 is configured to receive an audio or video signal. The A/V input unit 120 may include a camera 121 and a microphone 122. The camera 121 processes image data of still pictures or video acquired by an image capture device in a video capturing mode or an image capturing mode. The processed image frames may be displayed on a display unit 151.

The image frames processed by the camera 121 may be stored in the memory 160 or transmitted via the wireless communication unit 110. Two or more cameras 121 may be provided according to the configuration of the mobile terminal.

The microphone 122 may receive sounds (audible data) via a microphone in a phone call mode, a recording mode, a voice recognition mode, and the like, and can process such sounds into audio data. The processed audio (voice) data may be converted for output into a format transmittable to a mobile communication base station via the mobile communication module 112 in case of the phone call mode. The microphone 122 may implement various types of noise canceling (or suppression) algorithms to cancel (or suppress) noise or interference generated in the course of receiving and transmitting audio signals.

The user input unit 130 may generate key input data from commands entered by a user to control various operations of the mobile terminal. The user input unit 130 allows the user to enter various types of information, and may include a keypad, a dome switch, a touch pad (e.g., a touch sensitive member that detects changes in resistance, pressure, capacitance, etc. due to being contacted) a jog wheel, a jog switch, and the like.

The sensing unit 140 detects a current status (or state) of the mobile terminal 100 such as an opened or closed state of the mobile terminal 100, a location of the mobile terminal 100, the presence or absence of user contact with the mobile terminal 100 (e.g., touch inputs), the orientation of the mobile terminal 100, an acceleration or deceleration movement and direction of the mobile terminal 100, etc., and generates commands or signals for controlling the operation of the mobile terminal 100. For example, when the mobile terminal 100 is implemented as a slide type mobile phone, the sensing unit 140 may sense whether the slide phone is opened or closed. In addition, the sensing unit 140 can detect whether or not the power supply unit 190 supplies power or whether or not the interface unit 170 is coupled with an external device. The sensing unit 140 may include a proximity sensor 141.

The output unit 150 is configured to provide outputs in a visual, audible, and/or tactile manner. The output unit 150 may include the display unit 151, an audio output module 152, an alarm unit 153, a haptic module 154, and the like.

The display unit 151 may display information processed in the mobile terminal 100. For example, when the mobile terminal 100 is in a phone call mode, the display unit 151 may display a User Interface (UI) or a Graphic User Interface (GUI) associated with a call or other communication (such as text messaging, multimedia file downloading, etc.). When the mobile terminal 100 is in a video call mode or image capturing mode, the display unit 151 may display a captured image and/or received image, a UI or GUI that shows videos or images and functions related thereto, and the like.

The display unit 151 may include at least one of a Liquid Crystal Display (LCD), a Thin Film Transistor-LCD (TFT-LCD), an Organic Light Emitting Diode (OLED) display, a flexible display, a three-dimensional (3D) display, or the like.

Some of these displays may be configured to be transparent so that outside may be seen therethrough, which may be referred to as a transparent display. A representative example of the transparent display may include a Transparent Organic Light Emitting Diode (TOLED), and the like. The rear surface portion of the display unit 151 may also be implemented to be optically transparent. Under this configuration, a user can view an object positioned at a rear side of a body through a region occupied by the display unit 151 of the body.

The display unit 151 may be implemented in two or more in number according to a configured aspect of the mobile terminal 100. For instance, a plurality of displays may be arranged on one surface integrally or separately, or may be arranged on different surfaces.

Here, if the display unit 151 and a touch sensitive sensor (referred to as a touch sensor) have a layered structure therebetween, the structure may be referred to as a touch screen. The display unit 151 may be used as an input device rather than an output device. The touch sensor may be implemented as a touch film, a touch sheet, a touch pad, and the like.

The touch sensor may be configured to convert changes of a pressure applied to a specific part of the display unit 151, or a capacitance occurring from a specific part of the display unit 151, into electric input signals. Also, the touch sensor may be configured to sense not only a touched position and a touched area, but also a touch pressure.

When touch inputs are sensed by the touch sensors, corresponding signals are transmitted to a touch controller (not shown). The touch controller processes the received signals, and then transmits corresponding data to the controller 180. Accordingly, the controller 180 may sense which region of the display unit 151 has been touched.

Referring to FIG. 1, a proximity sensor 141 may be arranged at an inner region of the mobile terminal covered by the touch screen, or near the touch screen. The proximity sensor 141 indicates a sensor to sense presence or absence of an object approaching to a surface to be sensed, or an object disposed near a surface to be sensed, by using an electromagnetic field or infrared rays without a mechanical contact. The proximity sensor 141 has a longer lifespan and a more enhanced utility than a contact sensor.

The proximity sensor 141 may include a transmissive type photoelectric sensor, a direct reflective type photoelectric sensor, a mirror reflective type photoelectric sensor, a high-frequency oscillation proximity sensor, a capacitance type proximity sensor, a magnetic type proximity sensor, an infrared rays proximity sensor, and so on. When the touch screen is implemented as a capacitance type, proximity of a pointer to the touch screen is sensed by changes of an electromagnetic field. In this case, the touch screen (touch sensor) may be categorized into a proximity sensor.

Hereinafter, for the sake of brief explanation, a status that the pointer is positioned to be proximate onto the touch screen without contact will be referred to as 'proximity touch', whereas a status that the pointer substantially comes in contact with the touch screen will be referred to as 'contact touch'. For the position corresponding to the proximity touch of the pointer on the touch screen, such position corresponds to a position where the pointer faces perpendicular to the touch screen upon the proximity touch of the pointer.

The proximity sensor 141 senses proximity touch, and proximity touch patterns (e.g., distance, direction, speed, time, position, moving status, etc.). Information relating to the sensed proximity touch and the sensed proximity touch patterns may be output onto the touch screen.

The audio output module 152 may convert and output as sound audio data received from the wireless communication unit 110 or stored in the memory 160 in a call signal reception mode, a call mode, a record mode, a voice recognition mode, a broadcast reception mode, and the like. Also, the audio output module 152 may provide audible outputs related to a particular function performed by the mobile terminal 100 (e.g., a call signal reception sound, a message reception sound, etc.). The audio output module 152 may include a speaker, a buzzer, and so on.

The alarm unit 153 may provide outputs to inform about the occurrence of an event of the mobile terminal 100. Typical events may include call reception, message reception, key signal inputs, a touch input, etc. In addition to audio or video outputs, the alarm unit 153 may provide outputs in a different manner to inform about the occurrence of an event. The video signal or the audio signal may be output via the display unit 151 or the audio output module 152. Accordingly, the display unit 151 or the audio output module 152 may be classified as a part of the alarm unit 153.

The haptic module 154 generates various tactile effects which a user can feel. A representative example of the tactile effects generated by the haptic module 155 includes vibration. Vibration generated by the haptic module 155 may have a controllable intensity, a controllable pattern, and so on. For instance, different vibration may be output in a synthesized manner or in a sequential manner.

The haptic module 154 may generate various tactile effects, including not only vibration, but also arrangement of pins vertically moving with respect to a skin being touched (contacted), air injection force or air suction force through an injection hole or a suction hole, touch by a skin surface, presence or absence of contact with an electrode, effects by stimulus such as an electrostatic force, reproduction of cold or hot feeling using a heat absorbing device or a heat emitting device, and the like.

The haptic module 154 may be configured to transmit tactile effects (signals) through a user's direct contact, or a user's muscular sense using a finger or a hand. The haptic module 154 may be implemented in two or more in number according to the configuration of the mobile terminal 100.

The memory 160 may store a program for the processing and control of the controller 180. Alternatively, the memory 160 may temporarily store input/output data (e.g., phonebook data, messages, still images, video and the like). Also, the memory 160 may store data relating to various patterns of vibrations and audio output upon the touch input on the touch screen.

The memory 160 may be implemented using any type of suitable storage medium including a flash memory type, a hard disk type, a multimedia card micro type, a memory card type (e.g., SD or DX memory), Random Access Memory (RAM), Static Random Access Memory (SRAM), Read-Only Memory (ROM), Electrically Erasable Programmable Read-only Memory (EEPROM), Programmable Read-only Memory (PROM), magnetic memory, magnetic disk, optical disk, and the like. Also, the mobile terminal 100 may operate a web storage which performs the storage function of the memory 160 on the Internet.

The interface unit 170 may generally be implemented to interface the mobile terminal with external devices. The interface unit 170 may allow a data reception from an external device, a power delivery to each component in the mobile terminal 100, or a data transmission from the mobile terminal 100 to an external device. The interface unit 170 may include, for example, wired/wireless headset ports, external charger ports, wired/wireless data ports, memory card ports, ports for coupling devices having an identification module, audio Input/Output (I/O) ports, video I/O ports, earphone ports, and the like.

The identification module may be configured as a chip for storing various information required to authenticate an authority to use the mobile terminal 100, which may include a User Identity Module (UIM), a Subscriber Identity Module (SIM), a Universal Subscriber Identity Module (USIM), and the like. Also, the device having the identification module (hereinafter, referred to as 'identification device') may be implemented in a type of smart card. Hence, the identification device can be coupled to the mobile terminal 100 via a port.

Also, the interface unit 170 may serve as a path for power to be supplied from an external cradle to the mobile terminal 100 when the mobile terminal 100 is connected to the external cradle or as a path for transferring various command signals inputted from the cradle by a user to the mobile terminal 100. Such various command signals or power inputted from the cradle may operate as signals for recognizing that the mobile terminal 100 has accurately been mounted to the cradle.

The controller 180 typically controls the overall operations of the mobile terminal 100. For example, the controller 180 performs the control and processing associated with telephony calls, data communications, video calls, and the like. The controller 180 may include a multimedia module 181 which provides multimedia playback. The multimedia module 181 may be configured as part of the controller 180 or as a separate component.

The controller 180 can perform a pattern recognition processing so as to recognize writing or drawing input on the touch screen as text or image.

The power supply unit 190 serves to supply power to each component by receiving external power or internal power under control of the controller 180.

Various embodiments described herein may be implemented in a computer-readable medium using, for example, software, hardware, or some combination thereof.

For hardware implementation, the embodiments described herein may be implemented within one or more of Application Specific Integrated Circuits (ASICs), Digital Signal Processors (DSPs), Digital Signal Processing Devices (DSPDs), Programmable Logic Devices (PLDs), Field Programmable Gate Arrays (FPGAs), processors, controllers, micro-controllers, micro processors, other electronic units designed to perform the functions described herein, or a selective combination thereof. In some cases, such embodiments are implemented by the controller 180.

For software implementation, the embodiments such as procedures and functions may be implemented together with separate software modules each of which performs at least one of functions and operations. The software codes can be implemented with a software application written in any suitable programming language. Also, the software codes may be stored in the memory 160 and executed by the controller 180.

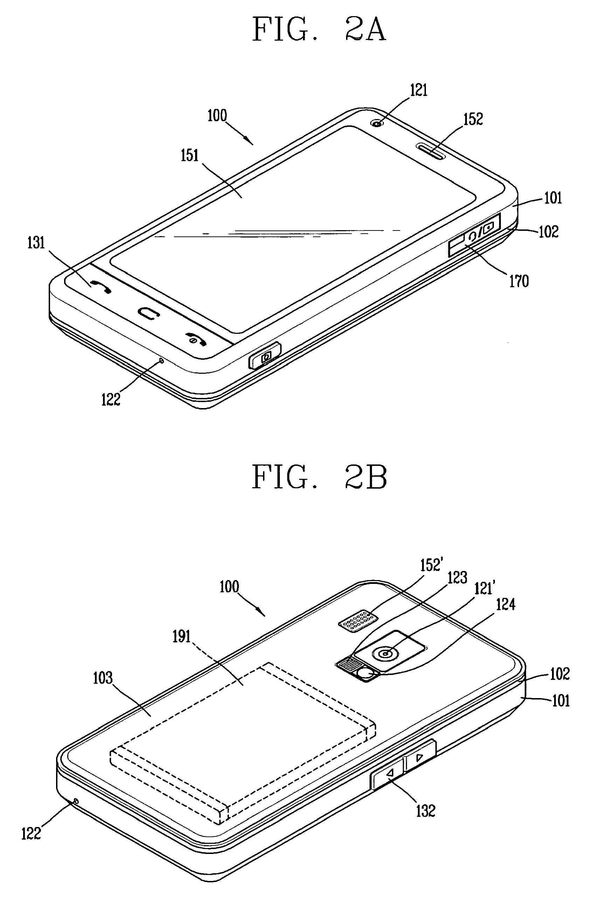

FIG. 2A is a front perspective view of a mobile terminal 100 according to one embodiment of the present disclosure, and FIG. 2B is a rear perspective view of the mobile terminal 100 of FIG. 2A.

The mobile terminal 100 is provided with a bar type terminal body. However, the present invention may not be limited to this bar type of mobile terminal, but may be applied to various types such as a slide type where two or more bodies are coupled to each other so as to perform a relative motion, a folder type, a swing type, a swivel type, etc.

The appearance of the mobile terminal 100 is implemented by a case (casing, housing, cover, etc.). The case may be formed by a front case 101, a rear case 102, and a battery cover 103. Each type of electronic components are mounted to space formed by the front case 101 and the rear case 102. One or more intermediate cases may be provided between the front case 101 and the rear case 102.

The cases may be formed by injection-molding synthetic resin, or formed using metallic material such as stainless steel (STS), aluminum (Al) and titanium (Ti).

At the terminal body, may be disposed the display unit 151, an audio output unit 152, a camera 121, user input units 130/131, 132, the microphone 122, the interface unit 170, etc.

The display unit 151 may be disposed to occupy most parts of a main surface of the front case 101. On a region adjacent to one end of the display unit 151, disposed are the audio output module 152 and the camera 121. On a region adjacent to another end of the display unit 151, disposed are the user input unit 131 and the microphone 122. The user input unit 132, the interface unit 170, etc. may be disposed on side surfaces of the front case 101 and the rear case 102.

The user input unit 130 is manipulated to receive a command for controlling the operation of the mobile terminal 100, and may include a plurality of manipulation units 131 and 132. The manipulation units 131 and 132 may be referred to as manipulating portions, and may include any type of ones that can be manipulated in a user's tactile manner.

The first and second manipulation units 131 and 132 may be set to receive inputs in various manners. For instance, the first manipulation unit 131 may be configured to input commands such as START, END, and SCROLL, and the second manipulation unit 132 may be configured to input commands such as controlling a volume of a sound outputted from the audio output module 152, or converting a mode of the display unit 151 into a touch recognition mode. The display unit 151 may form a touch screen together with a touch sensor, and the touch screen may be part of the user input unit 130.

Referring to FIG. 2B, a camera 121' may be additionally mounted to a rear surface of the terminal body, i.e., the rear case 102. The camera 121' faces a direction which is opposite to a direction faced by the camera 121 (refer to FIG. 2A), and may have pixels different from those of the camera 121.

For example, the camera 121 may operate with relatively lower pixels (lower resolution). Thus, the camera 121 may be useful when a user can capture his or her face and send it to a calling party in a video call mode or the like. On the other hand, the camera 121' may operate with a relatively higher pixels (higher resolution) such that it can be useful for a user to obtain higher quality pictures for later use. The cameras 121 and 121' may be installed at the terminal body so as to be rotated or popped-up.

A flash 123 and a mirror 124 may be additionally disposed adjacently to the camera 121'. When capturing an object by using the camera 121', the flash 123 provides light to the object. The mirror 124 can cooperate with the camera 121' to allow a user to photograph himself or herself in a self-portrait mode.

An audio output unit 152' may be additionally disposed on the rear surface of the terminal body. The audio output module 152' may implement a stereo function together with the audio output module 152 (refer to FIG. 2A), and may be used for calling in a speaker phone mode.

The power supply unit 190 for supplying power to the mobile terminal 100 is mounted to the terminal body. The power supply unit 190 may be implemented as a battery 191 configured to supply electricity to one or more components of the mobile terminal 100. The battery 191 may be mounted in the terminal body, or may be detachably mounted to the terminal body.

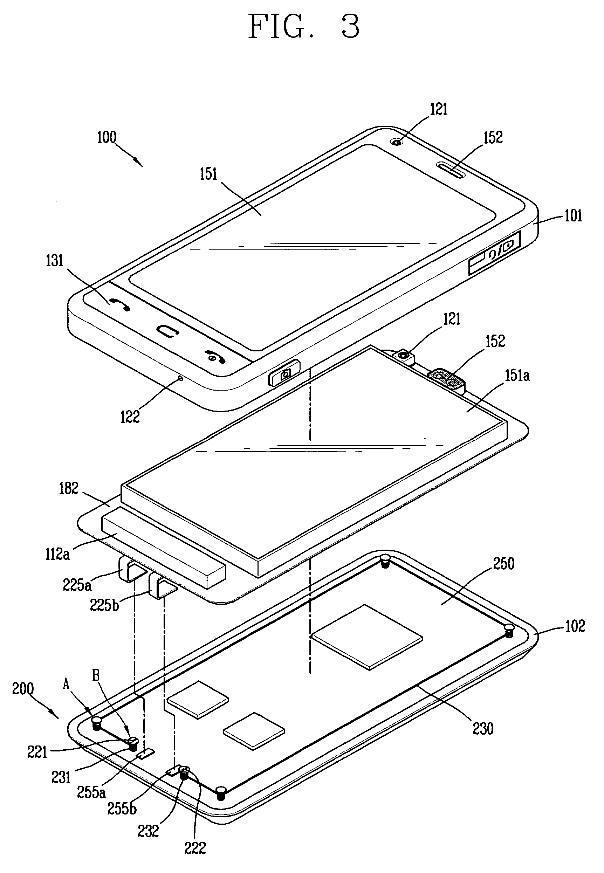

A broadcast signal receiving antenna as well as a main antenna 112a (refer to FIG. 3) for mobile communication may be additionally disposed at the terminal body. A near field communication (NFC) antenna 200 (refer to FIG. 3) may be disposed at the terminal body. Hereinafter, the NFC antenna 200 will be explained in more details with reference to FIGS. 3 to 13.

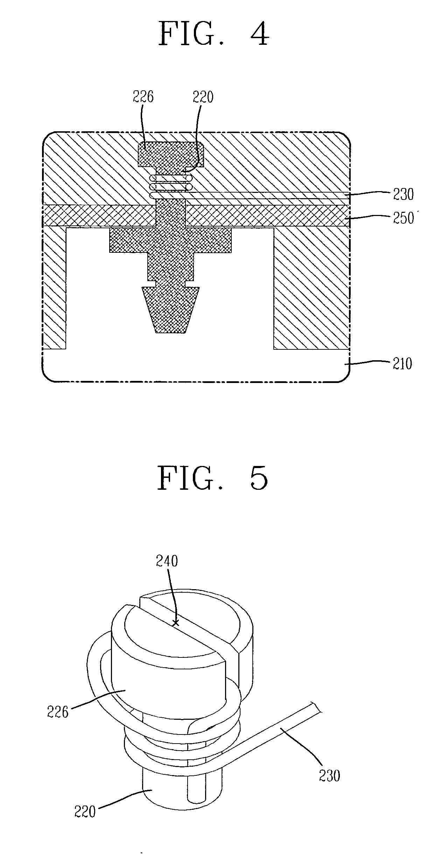

FIG. 3 is a disassembled perspective view of the mobile terminal 100 of FIG. 2B, and FIG. 4 is a sectional view of part 'A' of FIG. 2B.

Referring to FIG. 3, one or more printed circuit boards (PCBs) are disposed at space inside the terminal body. The PCBs 182 and 250 may be mounted to the front case 101, or the rear case 102, or an additional inner structure. The PCBs 182 and 250 may be configured as one example of the controller 180 (refer to FIG. 1) which controls the mobile terminal 100 so as to operate each type of functions of the mobile terminal 100. For instance, the PCBs 182 and 250 may be configured to display (output), on the display unit 151, information processed by the mobile terminal 100.

Electronic devices for operating each function of the mobile terminal 100 are mounted to one or more surfaces of the PCBs 182 and 250. For instance, the display unit 151, the audio output module 152, the camera 121, etc. may be mounted to one surface of the PCB 182.

An NFC antenna 200 for performing near field communication is mounted in the terminal body. The PCBs 182 and 250 are electrically connected to the NFC antenna 200, and process a radio signal transmitted or received by the NFC antenna 200.

Hereinafter, will be explained the NFC antenna 200 having a new structure on near field communication and capable of implementing a slim design of the mobile terminal 100, and a method for easily installing the NFC antenna 200 to the mobile terminal 100.

Referring to FIG. 4 with FIG. 3, a base 210 formed of synthetic resin and having one region is provided at the terminal body. The base 210 may be implemented as the front case 101, the rear case 102, or an additional internal structure.

The NFC antenna 200 performs near field communication, and includes a plurality of protrusions 220 and an antenna coil 230.

The protrusions 220 protrude from the base 210, and are spaced from each other along the edge of the region. The protrusions 220 may be integrally formed with the base 210, or may be stably coupled to the base 210 in an insert molding manner.

The protrusions 220 may be configured to couple the base 210 to another internal structure. As an example, the protrusion 220 is provided with a cavity, and a coupling member is coupled to the structure by being inserted into the cavity. This may allow coupling between the base 210 and the structure.

A printed circuit board (PCB) 250 may be disposed on one surface of the base 210, e.g., between the base 210 and the structure. The protrusions 220 may be disposed along the circumference of the PCB 250, and may be configured to support the PCB 250 when an external impact is applied to the PCB 250. Under this configuration, the protrusions 250 may limit motion of the PCB 250.

An antenna coil 230 is wound on the protrusions 220 along the edge of the region, thereby detecting a magnetic flux change occurring from the periphery of the terminal body. More specifically, the antenna coil 230 is wound on one of the protrusions 220 toward a neighboring protrusion (e.g., clockwise or counterclockwise direction), and forms a loop.

The antenna coil 230 is part of an electron-induced type of communication system which reads information by exchanging magnetic flux with an antenna of a reader, and forms the NFC antenna 200 of a radio frequency identification (RFID) tag. However, the present disclosure is not limited to this. That is, the antenna coil 230 may be configured to transmit or receive a radio signal to/from another mobile terminal.

The NFC antenna 200 may be implemented as a passive or semi-passive or active antenna according to a power source usage type. In the case of the passive NFC antenna, the mobile terminal uses a magnetic flux change of a reader as a power source, and performs communication by reading information on an integrated circuit. In the case of the semi-passive NFC antenna, a power source of the mobile terminal is used to read information on an integrated circuit, and a power source of a reader is used to perform communication. In the case of the active NFC antenna, a power source of the mobile terminal is used to read information on an integrated circuit, and to perform communication.

The antenna coil 230 is provided with a starting point 231 and an ending point 232 which form a loop. The antenna coil 230 is fixed to one protrusion 221 of the plurality of protrusions 220 in a wound manner several times, and forms a loop by extending from the starting point 231. The antenna coil 230 wound on the protrusions 220 within the region is wound on another protrusion 222 adjacent to the one protrusion 221 several times, thereby forming the ending point 232.

The antenna coil 230 may be fixed to the protrusion protrusions 220 in a wound manner several times, and may have a tensile force applied thereto. Alternatively, the antenna coil 230 may be configured to be wound, several times, on the protrusion 220 disposed at the starting point 231 and the ending point 232, but not to be wound on the rest protrusions 220. That is, the rest protrusions 220 may be configured to guide the antenna coil 230 to be wound thereon.

The plurality of protrusions 220 may be provided with separation prevention protrusions 226 protruding in a direction crossing a shaft direction. As an example, the separation prevention protrusion 226 may protrude from one end of the protrusion 220 along the outer circumference. Due to the separation prevention protrusions 226, the antenna coil 230 is prevented from being separated from the protrusions 220 in a shaft direction.

FIG. 3 shows an example of a structure in which the antenna coil 230 is electrically connected to a printed circuit board 182. Referring to FIG. 3, the PCB 182 may be disposed at the terminal body with a predetermined gap from the base 210, and may form space where electronic devices are mounted.

The PCBs 182 and 250 may be provided at the terminal body in plurality. As aforementioned, the PCB 250 may be disposed to cover the base 210, and the antenna coil 230 may be wound on the protrusions 220 along the edge of one region on the PCB 250. The PCB 182 may be spaced from the PCB 250.

The PCB 182 may be configured to process a radio signal associated with near field communication by being electrically connected to the antenna coil 230. A flexible printed circuit board (FPCB) may be connected to each of the PCB 182 and the antenna coil 230 so as to form an electric path therebetween.

As shown, connection terminals 255a and 255b connected to the antenna coil 230 may come in contact with connection terminals 225a and 225b connected to the PCB 182, thereby forming an electric path.

The connection terminals 255a and 255b may be provided in plurality, and may be disposed to be adjacent to one protrusion 221 and another protrusion 222, respectively. As an example, the connection terminals 255a and 255b may be disposed on a bottom surface of the PCB 250 disposed on the base 210. The connection terminals 255a and 255b may be formed to encompass one protrusion 221 and another protrusion 222, or may be integrally formed on outer circumferential surfaces of the one protrusion 221 and the another protrusion 222.

The connection terminals 225a and 225b may be configured to elastically contact the connection terminals 255a and 255b so that the starting point 231 and the ending point 232 can be electrically connected to the PCB 182, respectively. As an example, the connection terminals 225a and 225b may be implemented as C-clips having elasticity as part of a metallic frame is bent, or pogo pins having springs which provide elastic force toward the connection terminals 225a and 225b.

FIG. 5 is an enlarged view of part 'B' of FIG. 3.

Referring to FIG. 5, a fixing means for preventing unwinding of the antenna coil 230 may be formed at the protrusion 220. As shown, the fixing means may be implemented as a recess 240 concaved along a shaft direction of the protrusion 220 so that the antenna coil 230 can pass through the inside of the protrusion 220. Alternatively, the fixing means may be implemented as a hole formed to cross a shaft of the protrusion 220 so that the antenna coil 230 can be penetratingly formed at the protrusion 220.

The antenna coil 230 may be inserted into the recess 240 or the hole, and then may be stably fixed to the protrusion 220 by being wound on an outer circumference of the protrusion 220. Under this structure, the antenna coil 230 is fixed to the protrusion 220 in a wound manner thereon. This may allow the antenna coil 230 to be fixed to the protrusion 220 in easy and stable manners, by a minimized number of windings.

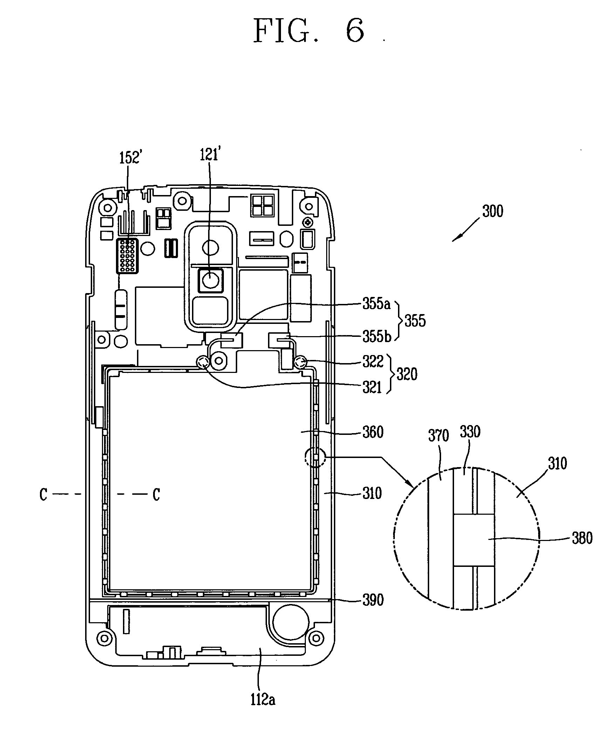

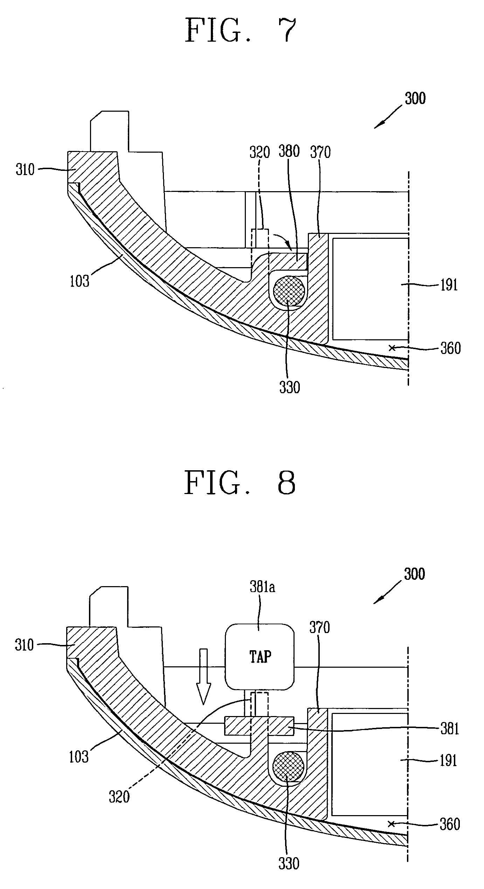

FIG. 6 is a planar view of a mobile terminal according to another embodiment of the present disclosure, and FIG. 7 is a sectional view taken along line 'C-C' in FIG. 6.

Referring to FIGS. 6 and 7, a base 310 includes a battery accommodation portion 360 having one surface recessed so as to mount a battery 191 therein, and the battery accommodation portion 360 which defines the one region. The antenna coil 330 may be configured to encompass the battery accommodation portion 360.

More specifically, a plurality of protrusions 320 are spaced from each other in correspondence to the battery accommodation portion 360. A wall 370 protrudes between the battery 191 and the antenna coil 330 in correspondence to the battery accommodation portion 360. The antenna coil 330 is mounted at space between the protrusions 320 and the wall 370, and is wound on the protrusions 320 in correspondence to the battery accommodation portion 360.

A separation prevention portion 380 may be formed at the battery accommodation portion 360 so as to cover the space between the protrusions 320 and the wall 370, so as to prevent separation of the antenna coil 330 from the space. The separation prevention portion 380 may be disposed so that the cover may be covered as the plurality of protrusions 320 are melted, or may be disposed so that the space may be covered by an additional member.

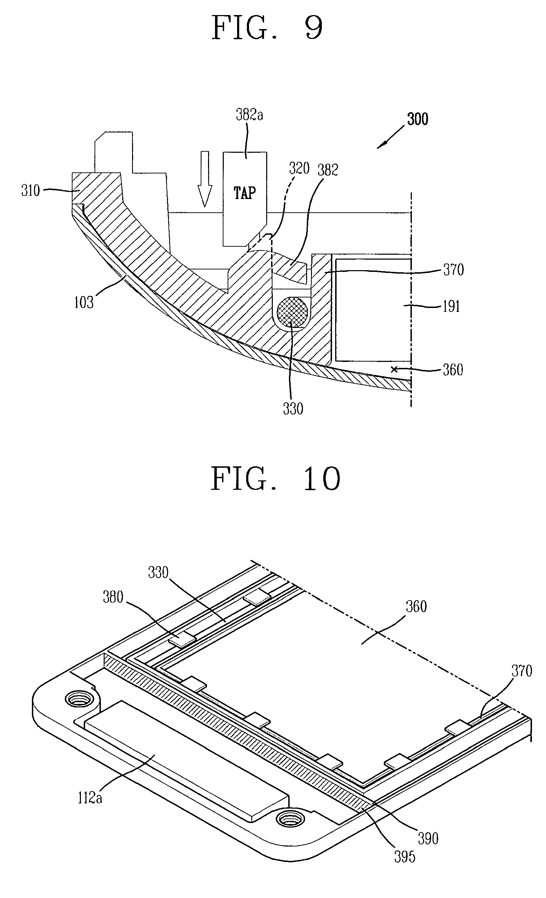

FIGS. 8 and 9 are conceptual views each showing that a plurality of protrusions 320 of FIG. 6 are melted by melting taps 381 a and 382b in a pressed manner.

Referring to FIGS. 8 and 9 with FIG. 6, the antenna coil 330 is disposed at space between the protrusions 320 and the wall 370, and is wound on the protrusions 320 in correspondence to the battery accommodation portion 360. Once the melting taps 381 a and 382b are pressed to the protrusions 320 after the antenna coil 330 has been wound on the protrusions 320, the ends of the protrusions 320 are melted to cover the space.

The separation prevention portions 381 and 382 may be formed in various shapes according to the shape of the end of the melting taps 381a and 382b. The shapes of the separation prevention portions 381 and 382 formed by melting correlate with pressing directions of the melting taps 381a and 382b with respect to a shaft direction of the protrusion 320, and the end shapes of the melting taps 381a and 382b.

As shown in FIG. 8, when the end shape of the melting tap 381a is perpendicular to the shaft direction and the pressing direction is parallel to the shaft direction, the separation prevention portion 381 protrudes from an outer circumferential surface of the protrusion 320. Accordingly, part of the separation prevention portion 381, the part covering the space prevents separation of the antenna coil 330.

Alternatively, as shown in FIG. 9, when the end shape of the melting tap 382b is inclined from the shaft direction even if the pressing direction is parallel to the shaft direction, the end of the protrusion 320 is melted to flow along an inclination surface of the melting tap 382b. That is, the separation prevention portion 382 is formed toward the wall 370, and covers the space.

FIG. 10 is a perspective view of a shielding wall 390 disposed between a main antenna 112a and an antenna coil 330 of FIG. 6.

Referring to FIG. 10 with FIG. 6, a main antenna 112a configured to transmit or receive a radio signal associated with far field communication may be disposed at a position adjacent to the battery accommodation portion 360. The main antenna 112a may be disposed at one end of the terminal body, e.g., a position spaced from the audio output module 152 (i.e., a position adjacent to the microphone 122) so as to minimize influence of a radio wave on a user.

A shielding wall 390 may protrude from space between the antenna coil 330 and the main antenna 112a. The shielding wall 390 shields electro magnetic interference (EMI) between the antenna coil 330 and the main antenna 112a, thereby minimizing interference therebetween. The shielding wall 390 may extend in a width direction of the terminal body. The shielding wall 390 may be formed of a conductor, and a conductive material may be coated on one surface of the shielding wall 390.

A ferrite sheet 395 may be attached to one or more surfaces of the shielding wall 390. The ferrite sheet 395 has a structure in which a plurality of metallic compounds are thinly unfold in the form of paper. And, the ferrite sheet 395 is configured to remove noise of a radio signal, and to restrict interference by a magnetic flux change occurring from a conductor.

More specifically, a magnetic flux change occurring when the antenna coil 330 is adjacent to a reader may result in interference by a conductor mounted in the terminal body. This conductor may be implemented as the display 151a, the battery 191, the camera 121, etc. as well as the main antenna 112a.

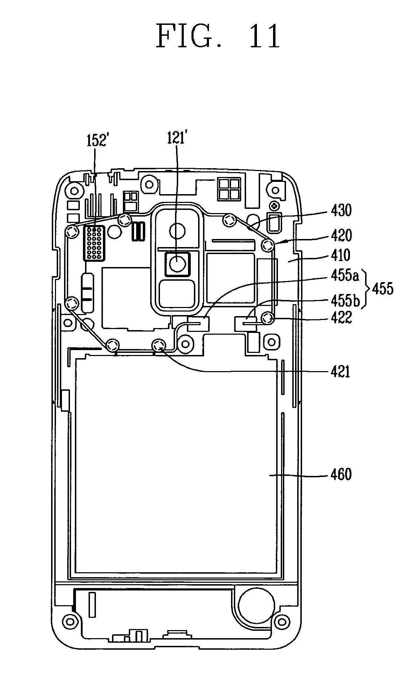

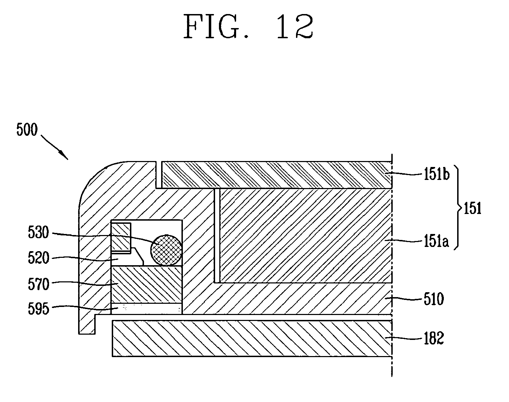

FIGS. 11 and 12 are conceptual views each showing a mobile terminal 100 according to another embodiment of the present disclosure. The same reference numerals will be provided to the same components as those of the aforementioned embodiment, and explanations thereof will be omitted.

Referring to FIG. 11, one region where each type of electronic devices such as a camera 121' and an audio output module 152' are disposed is provided at a position adjacent to a battery accommodation portion 460. A plurality of protrusions 420 are spaced from each other so as to encompass the region, and an antenna coil 430 is configured to encompass the electronic devices.

The antenna coil 430 may be fixed to the protrusions 420 in a wound manner several times, and form a loop by being wound clockwise or counterclockwise. The antenna coil 430 may be electrically connected to a printed circuit board (PCB) through a flexible printed circuit board (FPCB) or connection terminals.

Under this configuration, the protrusions 420 are formed at space inside the terminal body, and the antenna coil 430 is wound on the protrusions 420, thereby implementing radio communications. This may maximize a spatial utilization, and allow the mobile terminal 100 to have a slimmer configuration.

Referring to FIG. 12, a base 510 may include a bezel portion having a display 151a and a window 152 which covers the display 151a. An antenna coil 530 may be wound on a side surface of the bezel portion, and may form a loop so as to detect a magnetic flux change occurring from the periphery of a front surface of the terminal body.

A supporting unit 570 may be disposed on a side surface of the bezel portion, and may be configured to support an antenna coil 530. The supporting unit 570 may be disposed to cover the antenna coil 530 by being coupled to a plurality of protrusions 520, thereby preventing separation of the antenna coil 530 from the protrusions 520. In the present disclosure, the supporting unit 570 is implemented as an additional member. However, the supporting unit 570 may be implemented as the protrusions 520 are melted by melting taps so as to cover the antenna coil 530.

A ferrite sheet 595 may be attached to one or more surfaces of the supporting unit 570. The ferrite sheet 595 is configured to restrict interference by a magnetic flux change resulting from the PCB 182, the display 151a, etc. when the antenna coil 530 is adjacent to a reader.

The present disclosure may have the following advantages.

Firstly, the plurality of protrusions are spaced from each other along the edge of one region of the base. And, the antenna coil is wound on the plurality of protrusions, and forms a loop which encompasses the edge. Under this configuration, near field communication may be implemented.

Secondly, the structure may be applied to space inside the terminal body, e.g., the edge of the battery accommodation portion, the PCB, the bezel portion, etc. This may allow the mobile terminal to have a slim design.

Thirdly, the antenna coil may be automatically wound on the plurality of protrusions, and the antenna coil may be prevented from being separated from the protrusions. This may enhance an assembly characteristic, and reliability of a coupling structure.

The foregoing embodiments and advantages are merely exemplary and are not to be construed as limiting the present disclosure. The present teachings can be readily applied to other types of apparatuses. This description is intended to be illustrative, and not to restrict the scope of the claims. Many alternatives, modifications, and variations will be apparent to those skilled in the art.

As the present features may be embodied in several forms without departing from the characteristics thereof, it should also be understood that the above-described embodiments are not limited by any of the details of the foregoing description, unless otherwise specified, but rather should be construed broadly within its scope as defined in the appended claims, and therefore all changes and modifications that fall within the metes and bounds of the claims, or equivalents of such metes and bounds are therefore intended to be embraced by the appended claims.

## Claims

1. A mobile terminal, comprising:
a terminal body comprising a base (210, 310, 410, 510) having a defined region on a first surface of the base and a plurality of protrusions (220, 320, 420, 520) protruding from the first surface, wherein the plurality of protrusions are spaced apart from each other along an edge of the defined region; and
an antenna coil (230, 330, 430, 530) wound around each protrusion of the plurality of protrusions and extending from each protrusion to at least one adjacent protrusion of the plurality of protrusions along the edge of the defined region to form a loop along the edge of the defined region, wherein the antenna coil is configured to transmit or receive a radio signal for near field communication, **characterized in that**
at least one protrusion of the plurality of protrusions comprises:
a shaft portion protruding from the first surface of the base; and
a separation prevention portion (226) protruding radially from the shaft portion at an end portion away from the first surface of the base and configured to contain the antenna coil between the first surface of the base and the separation prevention portion.

2. The mobile terminal of claim 1, wherein the antenna coil comprises:
a first end portion (231) wound a plurality of times around a first protrusion (221) of the plurality of protrusions to fix the first end portion to the first protrusion;
a central portion wound sequentially around second through n^{th}-1 protrusions of the plurality of protrusions; and
a second end portion (232) wound a plurality of times around an n^{th} protrusion (222) of the plurality of protrusions that is adjacent to the first protrusion to fix the second end portion to the n^{th} protrusion,
wherein the n^{th} protrusion is adjacent to the first protrusion.

3. The mobile terminal of claim 2, wherein:
each of the first protrusion and the n^{th} protrusion comprises a cylindrical surface protruding from the first surface of the base and defining a recess (240) across an end of the protrusion away from the first surface of the base; and
the antenna coil is routed through the recess of each of the first protrusion and the n^{th} protrusion and is wound around the cylindrical surface of the first protrusion and the n^{th} protrusion.

4. The mobile terminal of claim 2 or 3, further comprising:
a printed circuit board (PCB, 182) spaced a distance from the first surface of the base and defining a space between the PCB and the first surface of the base;
a first connection terminal (225a) positioned adjacent to the first protrusion and configured to electrically couple the first end portion of the antenna coil to the PCB; and
a second connection terminal (225b) positioned adjacent to the n^{th} protrusion and configured to electrically couple the second end portion of the antenna coil to the PCB.

5. The mobile terminal of any one of claims 1 to 4, further comprising:
a battery (191) configured to provide power,
wherein the base comprises a battery accommodation portion (360, 460) recessed in the first surface, the battery accommodation portion defining the defined region,
wherein the battery is positioned in the battery accommodation portion; and
wherein the antenna coil surrounds the battery accommodation portion.

6. The mobile terminal of claim 5, further comprising:
a wall (370) protruding from the first surface of the base and positioned between the battery and the plurality of protrusions,
wherein the wall is positioned a distance from the plurality of protrusions to define a space between the plurality of protrusions and the wall, and
wherein the antenna coil is positioned within the space between the plurality of protrusions and the wall.

7. The mobile terminal of claim 6, further comprising at least one separation prevention member (380) configured to cover the space between the plurality of protrusions and the wall to contain the antenna coil in the space.

8. The mobile terminal of claim 7, wherein the separation prevention member is formed such that the space is covered as at least one protrusion of the plurality of protrusions is melted.

9. The mobile terminal of any one of claims 5 to 8, further comprising:
a main antenna (112a) positioned proximate the battery accommodation portion and configured to transmit or receive a radio signal for far field communication; and
a shielding wall (390) positioned between the antenna coil and the main antenna and configured to prevent electro-magnetic interference (EMI) between the antenna coil and the main antenna.

10. The mobile terminal of claim 9, further comprising:
a ferrite sheet (395) coupled to at least one sheet of the shielding wall and configured to remove radio signal noise and to restrict interference caused by a magnetic flux change from a conductor.

11. The mobile terminal of any one of claims 1 to 10, wherein:
the base includes a bezel portion enclosing a display (151a) configured to output visual information; and
the antenna coil is wound around an outer side surface of the bezel portion.

12. The mobile terminal of claim 11, further comprising a supporting unit (570) coupled to the outer side surface of the bezel portion and configured to support the antenna coil.

13. The mobile terminal of claim 12, wherein the supporting unit is further configured to cover the antenna coil and to contain the antenna coil between the supporting unit and the base.

14. A method for manufacturing a mobile terminal, the method comprising:
forming a shaft portion of each of a plurality of protrusions spaced apart from each other along an edge of a defined region on a first surface of a base of a terminal body, wherein the shaft portion of each of the plurality of protrusions protrudes from the first surface;
winding a first end portion of an antenna coil around the shaft portion of a first protrusion of the plurality of protrusions a plurality of times to fix the first end portion of the antenna coil to the first protrusion;
winding a central portion of the antenna coil sequentially around the shaft portion of second through n^{th}-1 protrusions of the plurality of protrusions;
winding a second end portion of the antenna coil to the shaft portion of an n^{th} protrusion of the plurality of protrusions a plurality of times to fix the second end portion of the antenna coil to the n^{th} protrusion, wherein the n^{th} protrusion is adjacent to the first protrusion; **characterized by**
melting each of the plurality of protrusions at an end portion away from the first surface of the base to form a separation prevention portion protruding radially from the shaft portion to contain the antenna coil between the first surface of the base and the separation prevention portion,
wherein the antenna coil forms a loop along the edge of the defined region.

## Patentansprüche

1. Mobiles Endgerät, das aufweist:
einen Endgerätkörper, der ein Unterteil (210, 310, 410, 510) mit einem definierten Bereich auf einer ersten Oberfläche des Unterteils und mehrere Vorsprünge (220, 320, 420, 520), die von der ersten Oberfläche vorstehen, aufweist, wobei die mehreren Vorsprünge entlang eines Rands des definierten Bereichs voneinander beabstandet sind; und
eine Antennenspule (230, 330, 430, 530), die um jeden Vorsprung der mehreren Vorsprünge gewickelt ist und sich von jedem Vorsprung zu wenigstens einem benachbarten Vorsprung der mehreren Vorsprünge entlang des Rands des definierten Bereichs erstreckt, um eine Schleife entlang des Rands des definierten Bereichs zu bilden, wobei die Antennenspule aufgebaut ist, um ein Funksignal für die Nahfeldkommunikation zu senden oder zu empfangen, **dadurch gekennzeichnet, dass**
wenigstens ein Vorsprung der mehreren Vorsprünge aufweist:
einen Schaftabschnitt, der von der ersten Oberfläche des Unterteils vorsteht; und
einen Trennschutzabschnitt (226), der an einem Endabschnitt weg von der ersten Oberfläche des Unterteils radial von dem Schaftabschnitt vorsteht und der derart aufgebaut ist, dass er die Antennenspule zwischen der ersten Oberfläche des Unterteils und dem Trennschutzabschnitt enthält.

2. Mobiles Endgerät nach Anspruch 1, wobei die Antennenspule aufweist:
einen ersten Endabschnitt (231), der mehrere Male um einen ersten Vorsprung (221) der mehreren Vorsprünge gewickelt ist, um den ersten Endabschnitt an dem ersten Vorsprung zu befestigen;
einen mittleren Abschnitt, der nacheinander um die zweiten bis n-1-ten Vorsprünge der mehreren Vorsprünge gewickelt ist; und
einen zweiten Endabschnitt (232), der mehrere Male um einen n-ten Vorsprung (222) der mehreren Vorsprünge gewickelt ist, der benachbart zu dem ersten Vorsprung ist, um den zweiten Endabschnitt an dem n-ten Vorsprung zu befestigen,
wobei der n-te Vorsprung benachbart zu dem ersten Vorsprung ist.

3. Mobiles Endgerät nach Anspruch 2, wobei:
der erste Vorsprung und der n-te Vorsprung jeweils eine zylindrische Oberfläche aufweisen, die von der ersten Oberfläche des Unterteils vorsteht und eine Aussparung (240) quer über ein Ende des Vorsprungs weg von der ersten Oberfläche des Unterteils definiert; und
eine Antennenspule durch die Aussparung des ersten Vorsprungs und des n-ten Vorsprungs geführt ist und um die zylindrische Oberfläche des ersten Vorsprungs und des n-ten Vorsprungs gewickelt ist.

4. Mobiles Endgerät nach Anspruch 2 oder 3, das ferner aufweist:
eine Leiterplatte (PCB, 182), die in einem Abstand von der ersten Oberfläche des Unterteils beabstandet ist und einen Raum zwischen der PCB und der ersten Oberfläche des Unterteils definiert;
eine erste Anschlussklemme (225a), die benachbart zu dem ersten Vorsprung positioniert ist und aufgebaut ist, um den ersten Endabschnitt der Antennenspule mit der PCB elektrisch zu koppeln; und
eine zweite Anschlussklemme (225b), die benachbart zu dem n-ten Vorsprung positioniert ist und aufgebaut ist, um den zweiten Endabschnitt der Antennenspule mit der PCB elektrisch zu koppeln.

5. Mobiles Endgerät nach einem der Ansprüche 1 bis 4, das ferner aufweist:
eine Batterie (191), die aufgebaut ist, um Leistung bereitzustellen;
wobei das Unterteil einen Batterieaufnahmeabschnitt (360, 460) aufweist, der in der ersten Oberfläche ausgespart ist, wobei der Batterieaufnahmeabschnitt den definierten Bereich definiert,
wobei die Batterie in dem Batterieaufnahmeabschnitt angeordnet ist; und
wobei die Antennenspule den Batterieaufnahmeabschnitt umgibt.

6. Mobiles Endgerät nach Anspruch 5, das ferner aufweist:
eine Wand (370), die von der ersten Oberfläche des Unterteils vorsteht und zwischen der Batterie und den mehreren Vorsprüngen positioniert ist,
wobei die Wand in einem Abstand von den mehreren Vorsprüngen positioniert ist, um einen Raum zwischen den mehreren Vorsprüngen und der Wand zu definieren, und
wobei die Antennenspule innerhalb des Raums zwischen den mehreren Vorsprüngen und der Wand positioniert ist.

7. Mobiles Endgerät nach Anspruch 6, das ferner wenigstens ein Trennschutzelement (380) aufweist, das aufgebaut ist, um den Raum zwischen den mehreren Vorsprüngen und der Wand zu bedecken, um die Antennenspule in dem Raum zu enthalten.

8. Mobiles Endgerät nach Anspruch 7, wobei das Trennschutzelement derart ausgebildet ist, dass der Raum bedeckt wird, während wenigstens ein Vorsprung der mehreren Vorsprünge geschmolzen wird.

9. Mobiles Endgerät nach einem der Ansprüche 5 bis 8, das ferner aufweist:
eine Hauptantenne (112a), die in nächster Nähe zu dem Batterieaufnahmeabschnitt positioniert ist und aufgebaut ist, um ein Funksignal für die Fernfeldkommunikation zu senden oder zu empfangen; und
eine Abschirmwand (390), die zwischen der Antennenspule und der Hauptantenne positioniert ist und aufgebaut ist, um elektromagnetische Störungen (EMI) zwischen der Antennenspule und der Hauptantenne zu verhindern.

10. Mobiles Endgerät nach Anspruch 9, das ferner aufweist:
eine Ferritschicht (395), die mit wenigstens einer Schicht der Abschirmwand gekoppelt ist und aufgebaut ist, um Funksignalrauschen zu entfernen und die Störungen, die durch eine Magnetflussänderung von einem Leiter verursacht werden, zu beschränken.

11. Mobiles Endgerät nach einem der Ansprüche 1 bis 10, wobei:
das Unterteil einen Einfassungsabschnitt umfasst, der eine Anzeige (151a) umgibt, die aufgebaut ist, um visuelle Informationen auszugeben; und
die Antennenspule um eine Außenseitenoberfläche des Einfassungsabschnitts gewickelt ist.

12. Mobiles Endgerät nach Anspruch 11, das ferner eine tragende Einheit (570) aufweist, die mit der Außenseitenoberfläche des Einfassungsabschnitts gekoppelt ist und aufgebaut ist, um die Antennenspule zu halten.

13. Mobiles Endgerät nach Anspruch 12, wobei die tragende Einheit ferner aufgebaut ist, um die Antennenspule zu bedecken und die Antennenspule zwischen der tragenden Einheit und dem Unterteil zu enthalten.

14. Verfahren zur Herstellung eines mobilen Endgeräts, wobei das Verfahren aufweist:
Ausbilden eines Schaftabschnitts jedes der mehreren Vorsprünge, die voneinander entlang eines Rands eines definierten Bereichs auf einer ersten Oberfläche eines Unterteils eines Endgerätkörpers beabstandet sind, wobei der Schaftabschnitt jedes der mehreren Vorsprünge von der ersten Oberfläche vorsteht;
mehrere Male Wickeln eines ersten Endabschnitts einer Antennenspule um den Schaftabschnitt eines ersten Vorsprungs der mehreren Vorsprünge, um den ersten Endabschnitt der Antennenspule an dem ersten Vorsprung zu befestigen;
nacheinander Wickeln eines mittleren Abschnitts der Antennenspule um den Schaftabschnitt der zweiten bis n-1-ten Vorsprünge der mehreren Vorsprünge;
mehrere Male Wickeln eines zweiten Endabschnitts der Antennenspule um den Schaftabschnitt eines n-ten Vorsprungs der mehreren Vorsprünge, um den zweiten Endabschnitt der Antennenspule an dem n-ten Vorsprung zu befestigen, wobei der n-te Vorsprung benachbart zu dem ersten Vorsprung ist; **gekennzeichnet durch**
Schmelzen jedes der mehreren Vorsprünge an einem Endabschnitt weg von der ersten Oberfläche des Unterteils, um einen Trennschutzabschnitt zu bilden, der radial von dem Schaftabschnitt vorsteht, um die Antennenspule zwischen der ersten Oberfläche des Unterteils und dem Trennschutzabschnitt zu enthalten,
wobei die Antennenspule eine Schleife entlang des Rands des definierten Bereichs bildet.

## Revendications

1. Terminal mobile, comprenant :
un corps de terminal comprenant une base (210, 310, 410, 510) possédant une région définie sur une première surface de la base et une pluralité de protubérances (220, 320, 420, 520) faisant saillie à partir de la première surface, dans lequel la pluralité de protubérances sont espacées les unes des autres le long d'un bord de la région définie ; et
une bobine d'antenne (230, 330, 430, 530) enroulée autour de chaque protubérance parmi la pluralité de protubérances et s'étendant de chaque protubérance à au moins une protubérance adjacente parmi la pluralité de protubérances le long du bord de la région définie pour former une boucle le long du bord de la région définie, dans lequel la bobine d'antenne est configurée pour transmettre ou recevoir un signal radio pour une communication en champ proche, **caractérisé en ce que** au moins une protubérance parmi la pluralité de protubérances comprend :
une partie tige faisant saillie à partir de la première surface de la base ; et
une partie de prévention de séparation (226) faisant saillie radialement à partir de la partie tige à une partie d'extrémité éloignée de la première surface de la base et configurée pour contenir la bobine d'antenne entre la première surface de la base et la partie de prévention de séparation.

2. Terminal mobile selon la revendication 1, dans lequel la bobine d'antenne comprend :
une première partie d'extrémité (231) enroulée une pluralité de fois autour d'une première protubérance (221) parmi la pluralité de protubérances pour fixer la première partie d'extrémité à la première protubérance ;
une partie centrale enroulée séquentiellement autour de protubérances, d'une deuxième à une nième-1, parmi la pluralité de protubérances ; et
une deuxième partie d'extrémité (232) enroulée une pluralité de fois autour d'une nième protubérance (222) parmi la pluralité de protubérances qui est adjacente à la première protubérance pour fixer la deuxième partie d'extrémité à la nième protubérance,
dans lequel la nième protubérance est adjacente à la première protubérance.

3. Terminal mobile selon la revendication 2, dans lequel :
chacune parmi la première protubérance et la nième protubérance comprend une surface cylindrique faisant saillie à partir de la première surface de la base et définissant un évidement (240) à travers une extrémité de la protubérance éloignée de la première surface de la base ; et
la bobine d'antenne est acheminée à travers l'évidement de chacune parmi la première protubérance et la nième protubérance et est enroulée autour de la surface cylindrique de la première protubérance et la nième protubérance.

4. Terminal mobile selon la revendication 2 ou 3, comprenant en outre :
une carte de circuit imprimé (« Printed Circuit Board » ou PCB, 182) espacée à une distance de la première surface de la base et définissant un espace entre la PCB et la première surface de la base ;
une première borne de connexion (225a) positionnée de façon adjacente à la première protubérance et configurée pour coupler électriquement la première partie d'extrémité de la bobine d'antenne à la PCB ; et
une deuxième borne de connexion (225b) positionnée adjacente à la nième protubérance et configurée pour coupler électriquement la deuxième partie d'extrémité de la bobine d'antenne à la PCB.

5. Terminal mobile selon une quelconque des revendications 1 à 4, comprenant en outre :
une batterie (191) configurée pour fournir de l'énergie électrique,
dans lequel la base comprend une partie de logement de batterie (360, 460) évidée dans la première surface, la partie de logement de batterie définissant la région définie,
dans lequel la batterie est positionnée dans la partie de logement de batterie ; et
dans lequel la bobine d'antenne entoure la partie de logement de batterie.

6. Terminal mobile selon la revendication 5, comprenant en outre :
une paroi (370) faisant saillie à partir de la première surface de la base et positionnée entre la batterie et la pluralité de protubérances, dans lequel la paroi est positionnée à une distance de la pluralité de protubérances
pour définir un espace entre la pluralité de protubérances et la paroi, et
dans lequel la bobine d'antenne est positionnée à l'intérieur de l'espace entre la pluralité de protubérances et la paroi.

7. Terminal mobile selon la revendication 6, comprenant en outre au moins un élément de prévention de séparation (380) configuré pour couvrir l'espace entre la pluralité de protubérances et la paroi pour contenir la bobine d'antenne dans l'espace.

8. Terminal mobile selon la revendication 7, dans lequel l'élément de prévention de séparation est formé de sorte que l'espace soit couvert lorsqu'au moins une protubérance parmi la pluralité de protubérances est fondue.

9. Terminal mobile selon une quelconque des revendications 5 à 8, comprenant en outre :
une antenne principale (112a) positionnée à proximité de la partie de logement de batterie et configurée pour transmettre ou recevoir un signal radio pour une communication en champ éloigné ; et
une paroi de blindage (390) positionnée entre la bobine d'antenne et l'antenne principale et configurée pour empêcher l'interférence électromagnétique (« Electro-Magnetic Interference » ou EMI) entre la bobine d'antenne et l'antenne principale.

10. Terminal mobile selon la revendication 9, comprenant en outre :
une feuille de ferrite (395) couplée avec au moins une feuille de la paroi de blindage et configurée pour éliminer un bruit de signal radio et pour limiter l'interférence entraînée par un changement de flux magnétique à partir d'un conducteur.

11. Terminal mobile selon une quelconque des revendications 1 à 10, dans lequel :
la base comprend une partie lunette d'encadrement enfermant un affichage (151a) configurée pour produire des informations visuelles ; et
la bobine d'antenne est enroulée autour d'une surface latérale extérieure de la partie lunette d'encadrement.

12. Terminal mobile selon la revendication 11, comprenant en outre une unité de support (570) couplée avec la surface latérale extérieure de la partie lunette d'encadrement et configurée pour supporter la bobine d'antenne.

13. Terminal mobile selon la revendication 12, dans lequel l'unité de support est en outre configurée pour couvrir la bobine d'antenne et pour contenir la bobine d'antenne entre l'unité de support et la base.

14. Procédé pour fabriquer un terminal mobile, le procédé comprenant :
la formation d'une partie tige de chacune parmi une pluralité de protubérances espacées les unes des autres le long d'un bord d'une région définie sur une première surface d'une base d'un corps de terminal, dans lequel la partie tige de chacune parmi la pluralité de protubérances fait saillie à partir de la première surface ;
l'enroulement d'une première partie d'extrémité d'une bobine d'antenne autour de la partie tige d'une première protubérance parmi la pluralité de protubérances une pluralité de fois pour fixer la première partie d'extrémité de la bobine d'antenne à la première protubérance ;
l'enroulement d'une partie centrale de la bobine d'antenne séquentiellement autour de la partie tige de protubérances, d'une deuxième à une nième-1, parmi la pluralité de protubérances ;
l'enroulement d'une deuxième partie d'extrémité de la bobine d'antenne sur la partie tige d'une nième protubérance parmi la pluralité de protubérances une pluralité de fois pour fixer la deuxième partie d'extrémité de la bobine d'antenne à la nième protubérance, dans lequel la nième protubérance est adjacente à la première protubérance ; **caractérisé par**
la fusion de chacune parmi la pluralité de protubérances à une partie d'extrémité éloignée de la première surface de la base pour former une partie de prévention de séparation faisant saillie radialement à partir de la partie tige pour contenir la bobine d'antenne entre la première surface de la base et la partie de prévention de séparation, dans lequel la bobine d'antenne forme une boucle le long du bord de la région définie.
